## Europäisches Patentamt

## European Patent Office

## Office européen des brevets

(19)

(11) Publication number: **0 301 018 B1**

# EUROPEAN PATENT SPECIFICATION

(12)

(45) Date of publication of patent specification: **03.06.92**  (51) Int. Cl.5: **B60T 7/20**

(21) Application number: **87902513.8**

(22) Date of filing: **20.03.87**

(86) International application number:
**PCT/FI87/00040**

(87) International publication number:
**WO 87/05571 (24.09.87 87/21)**

(54) **A METHOD AND AN APPARATUS FOR AUTOMATICALLY AJDUSTING THE BRAKES OF AN ARTICULATED VEHICLE PROVIDED WITH PNEUMATIC BRAKES.**

(30) Priority: **20.03.86 FI 861175**

(43) Date of publication of application:
**01.02.89 Bulletin 89/05**

(45) Publication of the grant of the patent:
**03.06.92 Bulletin 92/23**

(84) Designated Contracting States:
**AT BE CH DE FR IT LI LU NL SE**

(56) References cited:
| | |
|---|---|
| WO-A-86/02323 | CH-A- 583 110 |
| GB-A- 1 404 949 | GB-A- 1 497 179 |
| GB-A- 1 598 879 | US-A- 3 955 652 |
| US-A- 4 231 442 | |

(73) Proprietor: **SARAMO, Jorma**
**Yrjönkatu 1 L**
**SF-41160 Tikkakoski(FI)**

(72) Inventor: **SARAMO, Jorma**
**Yrjönkatu 1 L**
**SF-41160 Tikkakoski(FI)**

(74) Representative: **Ackroyd, Robert et al**
**W.P. THOMPSON & CO. Eastcheap House**
**Central Approach**
**Letchworth, Hertfordshire SG6 3DS(GB)**

EP 0 301 018 B1

Rank Xerox (UK) Business Services

# EP 0 301 018 B1

**Description**

The invention relates to apparatus for automatically adjusting the brakes of articulated vehicles.

The brakes of an articulated vehicle are usually adjusted to the value required by the maximum load mainly on the basis of theoretical calculations, deceleration measurements or dynamometer tests. However, such an adjustment is suitable for one combination and one weight ratio only. In practice it is, however, necessary to couple crosswise tractor vehicles and trailers, and since different tractor vehicles have different brake effects, the adjustment should always be carried out in connection with the coupling or when the load is changed. Previously, attempts have been made to eliminate the influence of load changes by providing mainly the front axle of the trailer with brake valves adjustable according to the load but these do not function properly and thus have not gained any greater popularity.

An important drawback of prior fixed adjustment arrangements is that in most cases the brakes of the trailer are oversized, especially when the trailer is incompletely loaded or empty. Wide variation occurs in the brake force of tractor vehicles, which leads to completely different braking properties when a trailer well suited for one tractor vehicle is coupled to another tractor vehicle. In addition, changes in the load cannot be taken into consideration in prior arrangements.

Anti-locking brake systems will soon be applied to articulated vehicles but this will not eliminate the need of adjustment. An additional device for such systems is disclosed in GB-A-1 598 879. This device functions only if the trailer exerts a compressive force during the braking and the adjustment only effects a reduction in the braking effect of the tractor vehicle, restricting the increase in the brake pressure of one axle or all axles. The force sensor is of the threshold value type, enabling a graded adjustment only.

US-A-4 231 442 discloses an apparatus which adjusts the braking effect of an articulated vehicle on the basis of the braking effect of a trailer positioned last in the combination. The adjustment is carried out in the articulated vehicle in such a way that the brakes positioned at the tractor vehicle end of the combination are the last ones to be adjusted. At first only the rear wheels are activated by the brake pedal and thereafter the braking effect of the tractor vehicle is adjusted on the basis of the force of the drawbar so that it corresponds to the braking effect of the trailer. A traction force has to exist between the carriages of the articulated vehicle in order that the apparatus would adjust the brakes of a carriage positioned in front of another part. If the brakes of the carriage positioned last in the combination do not function for one reason or another, no traction force is created in the drawbar, as a result of which the system does not function. Also in this system the total deceleration is determined on the basis of the braking effect of the trailer.

Both these known systems are very complicated and they cannot be installed afterwards. They are not acceptable in general use, since they reduce the deceleration of the tractor vehicle, so that the combination does not fulfil the requirements of e.g. the Finnish legislation on vehicles, which requires a deceleration of 5 m/s$^2$ with a pressure of 450 kPa. With the permissible weight ratios, it is possible to adjust only the braking effect of the trailers in order to maintain the required deceleration, since in most cases the trailer is empty or incompletely loaded, whereas the tractor vehicle has a full load. On the other hand, when the whole combination is full or respectively empty, the weight ratio between the tractor vehicle and the trailer is changed to such an extent (22/26 - 10/6) that when there is no load at all, the brakes of the trailer are considerably oversized in relation to the brakes of the tractor vehicle.

US-A-3 955 652 shows an operating system designed for adjusting the braking effect of a trailer in an articulated vehicle. The adjusting is carried out in dependence on the compressive or pulling force sensed in the coupling between the tractor vehicle and the trailer. The disadvantage with this known operating system is, however, that it relates to an independent braking system for a trailer, which braking system is integrally mounted on the trailer. Such an arrangement is definitely unpractical, because it is based on the fact that the tractor vehicle of an articulated vehicle is coupled to a trailer which is provided with said braking system, i.e. each trailer to be coupled to the tractor vehicle must be provided with said operating system. Since it is very common, actually almost a rule, to have different trailers with the same tractor vehicle, each trailer must have its own braking system.

Thus, a principal object of the apparatus according to the invention is to provide a decisive improvement over the aforementioned arrangements.

For achievement of this object, according to the invention there is provided apparatus for automatically adjusting the brakes of a motor-driven articulated vehicle comprising a tractor and a trailer, the apparatus comprising a force sensor to be connected between the tractor and the trailer, a servo control unit and a control pressure regulator, wherein the force sensor is adapted to measure both traction and pushing force and is connected to the servo control unit, which comprises a comparator which detects from an impulse from the force sensor whether the force acting between the tractor and the trailer of the articulated vehicle is a pushing force or a traction force, said comparator being adapted to control an amplifier of the servo

2

control unit, which amplifier controls the air pressure of the brakes of the trailer though the control pressure regulator, and wherein all said components of the apparatus except the force sensor are so arranged that they are readily carried by the tractor.

The force sensor is preferably positioned in the draw coupling or in the drawbar.

As compared to known solutions, the invention has e.g. the following advantages:

- the adjustment affects the trailer only so that the above deceleration requirement is met under all conditions,
- changes in the load of both parts of the combination can be taken into consideration according to the invention. The force of the drawbar is determined by means of the following equation:

$$F_a = \frac{F_{j2} \times m_1 - F_{j1} \times m_2}{m_1 + m_2},$$

in which

$F_a$ = the draw-bar force (N)

$F_{j1}$ = the summation (total) brake force in the traction vehicle (N)

$F_{j2}$ = the summation (total) brake force in the trailer vehicle (N)

$m_1$ = the mass of the traction vehicle (kg)

$m_2$ = the mass of the trailer (kg)

- the entire apparatus is mounted in the tractor vehicle although the adjustment affects only the trailer, which is an advantage in that one and the same tractor vehicle can be used with trailers of various types and braking effects without changing the braking system of the trailers. This is very practical, because it is very common to use one and the same tractor vehicle with different trailers,
- the apparatus replaces a prior manually operated adjusting valve and so-called load-sensitive (ALB) valves (in the tractor vehicle and the trailer),
- the apparatus can be easily constructed portable so that it can be displaced from one vehicle to another,
- the apparatus does not risk the normal operation of the brakes in case of failure,
- when the allowance for adjustment of the brakes is not possible due to excessive wear the driver is informed of failure and the need of the repair of the brakes,
- the apparatus does not require any changes in existing brakes and coupling means.

The road safety is increased substantially, because it is possible by means of the apparatus according to the invention to prevent the trailer from tossing from side to side especially when the brakes are applied in sudden situations.

In the following, an embodiment of the invention will be described by way of example, with reference to the drawings, wherein:

Figure 1 shows generally the positioning of the apparatus in an articulated vehicle,

Figure 2 shows a preferred position of the force sensor of the apparatus, and

Figure 3 illustrates schematically the operation of the apparatus.

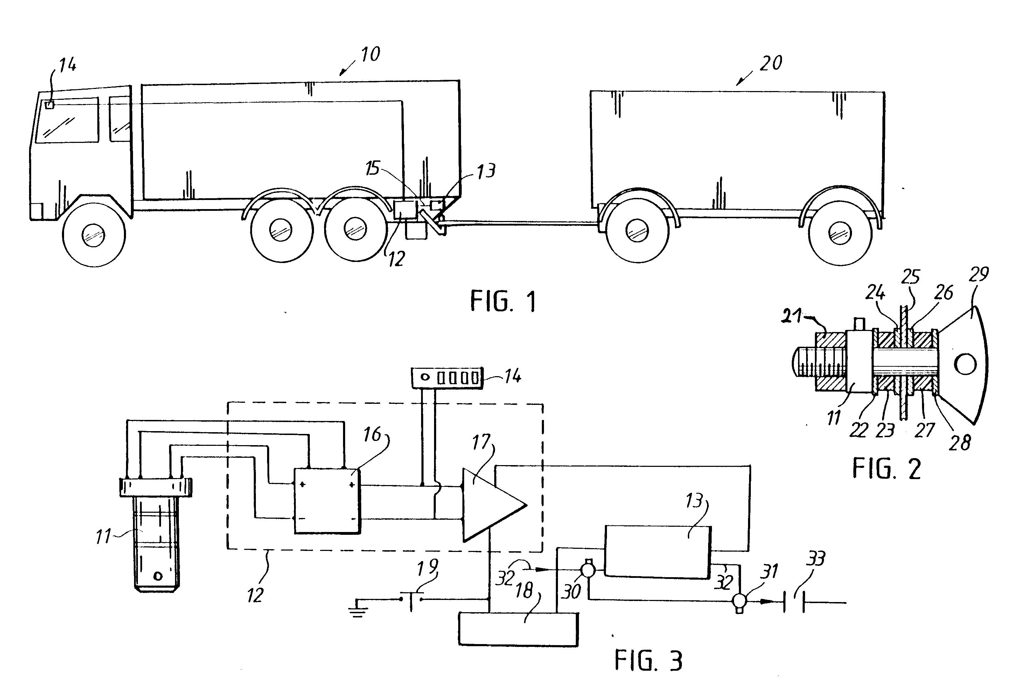

According to Figures 1 and 2, a force sensor 11 is placed in the coupling between a tractor vehicle 10 and a trailer 20, which sensor is preferably an electrical strain gauge. As shown in Figure 2, the force sensor 11 is fitted in the draw coupling of the tractor vehicle 10 in such a way that it is positioned between a fastening nut 21 thereof and that end 29 of the draw coupling which faces towards the trailer 20 and that said fastening nut 21 is positioned on one side of the force sensor 11 and a steel plate 22 is positioned on the other side thereof, the steel plate being followed, in the direction towards the draw coupling end 29 facing the trailer 20, by a rubber plate 23, a steel plate 24, a draw plate 25 of the body of the tractor vehicle 10, a steel plate 26, a rubber plate 27 and a steel plate 28 after which said end 29 is positioned. Due to the rubber plates 23 and 27, the force sensor 11 is squeezed between the fastening screw 21 and the steel plate 22, which squeezing is compensated by setting the apparatus to zero. The deformation of the rubber plate 23 and 28 in long-term use is compensated similarly. The force sensor 11 is connected to a servo control unit 12 from which a display and failure message is applied to a display device 14 positioned in the cabin. The servo control unit 12 communicates with a control pressure regulator 13 through a cable 15.

According to Figure 3, the force sensor 11 is electrically connected to a comparator 16 of the servo mechanism. If a traction load is exerted on the traction means, i.e. the force sensor 11, during braking, that is, if the brakes of the trailer are oversized, the comparator 16 detects this minus-sign voltage and gives an amplifier 17 an instruction to reduce the control pressure to such an extent that the traction load is eliminated so that the voltage from the sensor goes to zero. The amplifier 17 gives said instruction, e.g. to an actuating means 18, which can be a cylinder, a motor or the like, or gives said instruction directly without passing any actuating means to a pressure regulator 13 which is connected in such a manner that it adjusts the control pressure of the brakes of the trailer. The comparator 16 obtains a continuous operating voltage from the electrical system of the vehicle, whereas the amplifier 17 obtains a voltage only during braking, e.g. from a brake light switch 19.

When a pushing force is exerted on the traction means, the comparator 16 detects a plus-sign voltage and the control pressure is increased until the voltage supplied by the sensor 11 is zero. The pressure regulator 13 functions only during braking, because it obtains operating voltage from the brake light switch 19. The adjustment of the brakes is thus always carried out after the coupling in connection with the first application of brakes and always during the first application of brakes after the load of the vehicle is changed, the fine adjustment being carried out in connection with each application of the brakes.

For security reasons a magnetic valve 30, 31 is attached to the control pressure regulator 13 both on the inlet and the delivery side of the pressure regulator. The magnetic valves 30, 31 enable the shunting of the pressure regulator 13 if an electrical failure occurs in the control system, if the parking brake is on or when applying a manually operated trailer brake, a so-called emergency brake; that is, the shunting is needed in sudden situations when it must be ascertained that the trailer will be braked.

An air pressure conduit leading to the pressure regulator 13 is indicated by the reference numeral 32 and an air pressure conduit from the regulator by the reference number 32. The reference numeral 33 designates the coupling connection to the trailer brakes.

The apparatus further comprises a display device 14 positioned in e.g. the cabin of the tractor vehicle 10 for observing the operation and for indicating a need of service.

The logic means also obtain data from the reversing light switch, which ensures that the adjustment is carried out in the right direction during reversing, too.


**Claims**

1. Apparatus for automatically adjusting the brakes of a motor-driven articulated vehicle comprising a tractor (10) and a trailer (20), the apparatus being adapted solely to adjust brakes on the trailer, the apparatus comprising a force sensor (11) to be connected between the tractor (10) and the trailer (20), a servo control unit (12) and a control pressure regulator (13), wherein the force sensor (11) is adapted to measure both traction and pushing force and is connected to the servo control unit (12), which comprises a comparator (16) which detects from an impulse from the force sensor (11) whether the force acting between the tractor (10) and the trailer (20) of the articulated vehicle is a pushing force or a traction force, said comparator (16) being adapted to control an amplifier (17) of the servo control unit (12), which amplifier (17) controls the air pressure of the brakes of the trailer (20) through the control pressure regulator (13), characterized in that all said components of the apparatus except the force sensor (11) are so arranged that they are readily carried by the tractor (10).

2. Apparatus according to claim 1, wherein three-way magnetic valves (30,31) are attached to the control pressure regulator (13) both on the inlet and the outlet side of the pressure regulator (13), which valves (30,31) enable the pressure regulator (13) to be shunted if there is an electrical failure in the control system, if the parking brake is on, or when applying a manually operable emergency brake of the trailer (20).

3. Apparatus according to claim 1 or 2, comprising a display device (14) which is arranged to be fitted in the cabin of the tractor (10) and which is connected to the output of the comparator (16), which display device enables the braking to be checked visually and indicates a possible need of servicing the brakes.

4. A tractor (10) for a motor-driven articulated vehicle, including apparatus according to claim 1, 2 or 3.

5. A tractor (10) according to claim 4, wherein the force sensor is a strain gauge (11) which is fitted in the draw coupling of the tractor (10), between the fastening nut (21) of the coupling and that end (29) of the draw coupling which faces towards the trailer (20).

6. A tractor (10) according to claim 4 or 5, wherein the pressure regulator (13) is connected to the brake circuit of the tractor (10) so that it obtains an operating voltage from a brake light switch (19) only during braking.

7. A motor-driven articulated vehicle comprising a tractor (10) according to any of claims 4 to 7 and a trailer (20), the brake adjustment apparatus being adapted solely to adjust brakes on the trailer (20).

**Revendications**

1. Appareil d'ajustement automatique des freins d'un véhicule articulé à moteur, comprenant un tracteur (10) et une remorque (20), l'appareil étant destiné uniquement à l'ajustement des freins placés sur la remorque, l'appareil comprenant un capteur de force (11) destiné à être connecté entre le tracteur (10) et la remorque (20), un ensemble (12) de servocommande et un régulateur (13) de pression de commande, le capteur de force (11) étant destiné à mesurer à la fois la force de traction et de poussée et étant connecté à l'ensemble de servocommande (12) qui comporte un comparateur (16) qui détecte, à partir d'une impulsion du capteur de force (11), si la force existant entre le tracteur (10) et la remorque (20) du véhicule articulé est une force de poussée ou de traction, le comparateur (16) étant destiné à commander un amplificateur (17) de l'ensemble de servocommande (12), cet amplificateur (17) réglant la pression de l'air des freins de la remorque (20) par l'intermédiaire du régulateur (13) de la pression de commande, caractérisé en ce que tous les éléments de l'appareil, mis à part le capteur de force (11), sont disposés de manière qu'ils soient facilement transportés par le tracteur (10).

2. Appareil selon la revendication 1, dans lequel des électrovannes à trois voies (30, 31) sont montées sur le régulateur (13) de pression de commande à l'entrée et à la sortie du régulateur (13) de pression, ces électrovannes (30, 31) permettant la mise en shunt du régulateur de pression (13) en cas de panne électrique du circuit de commande, si le frein de parcage est serré, ou lors du serrage d'un frein manuel de secours de la remorque (20).

3. Appareil selon la revendication 1 ou 2, comprenant un dispositif d'affichage (14) destiné à être placé dans la cabine du tracteur (10) et qui est connecté à la sortie du comparateur (16), ce dispositif d'affichage permettant la vérification visuelle du freinage et indiquant la nécessité éventuelle d'un entretien des freins.

4. Tracteur (10) destiné à un véhicule articulé à moteur, comprenant un appareil selon la revendication 1, 2 ou 3.

5. Tracteur (10) selon la revendication 4, dans lequel le capteur de force est une jauge dynamométrique (11) qui est montée sur l'accouplement de traction du tracteur (10), entre l'écrou (21) de fixation de l'accouplement et l'extrémité (29) de l'accouplement de traction qui est tournée vers la remorque.

6. Tracteur (10) selon la revendication 4 ou 5, dans lequel le régulateur (13) de pression est raccordé au circuit de freinage du tracteur (10) afin qu'il tire une tension de commande d'un interrupteur (19) de lampe témoin de freinage uniquement pendant le freinage.

7. Véhicule articulé à moteur comprenant un tracteur (10) selon l'une quelconque des revendications 4 à 7 et une remorque (20), l'appareil d'ajustement de freinage étant destiné à ajuster uniquement les freins de la remorque (20).

**Patentansprüche**

1. Vorrichtung zur automatischen Einstellung der Bremsen eines motorgetriebenen Gelenkfahrzeugs, das ein Zugfahrzeug (10) und einen Anhänger (20) umfaßt, welche Vorrichtung angeordnet ist, nur Bremsen des Anhängers einzustellen, und welche Vorrichtung einen Kraftfühler (11), der zwischen das Zugfahrzeug (10) und den Anhänger (20) geschaltet werden soll, eine Servokontrolleinheit (12) und einen Kontrolldruckregler (13) aufweist, wobei der Kraftfühler (11) angeordnet ist, sowohl Zug- als auch Schubkraft zu messen, und mit der Servokontrolleinheit (12) verbunden ist, die einen Komparator (16) aufweist, der anhand eines Impulses aus dem Kraftfühler (11) ermittelt, ob die Kraft, die zwischen dem Zugfahrzeug (10) und dem Anhänger (20) des Gelenkfahrzeugs wirkt, eine Schubkraft oder eine Zugkraft ist, welcher Komparator (16) angeordnet ist, einen Verstärker (17) der Servokontrolleinheit (12) zu steuern, welcher Verstärker (17) den Luftdruck der Bremsen des Anhängers (20) über den Kontrolldruckregler (13) steuert, dadurch **gekennzeichnet,** daß alle erwähnten Komponenten der Vorrichtung außer dem Kraftfühler (11) so angeordnet sind, daß sie leicht von dem Zugfahrzeug getragen werden

2. Vorrichtung nach Patentanspruch 1, dadurch **gekennzeichnet,** daß Dreiwegmagnetventile (30, 31) an dem Kontrolldruckregler (13) sowohl an der Einlaß- als auch Auslaßseite des Druckreglers (13) befestigt sind, welche Ventile (30, 31) eine Umgehung des Druckreglers (13) ermöglichen, wenn es einen elektrischen Fehler im Kontrollsystem gibt, wenn die Parkbremse angelegt ist, oder wenn eine manuell betriebene Notbremse des Anhängers (20) verwendet wird.

3. Vorrichtung nach Patentanspruch 1 oder 2, dadurch **gekennzeichnet,** daß sie eine Anzeigevorrichtung (14) aufweist, die angeordnet ist, in der Kabine des Zugfahrzeugs (10) angebracht zu werden, und die mit dem Ausgang des Komparators (16) verbunden ist, welche Anzeigevorrichtung eine visuelle Kontrolle der Bremsung ermöglicht und einen eventuellen Bedarf an Überholung der Bremsen anzeigt.

4. Zugfahrzeug (10) für ein motorgetriebenes Gelenkfahrzeug, das eine Vorrichtung nach Patentanspruch 1, 2 oder 3 enthält.

5. Zugfahrzeug (10) nach Patentanspruch 4, dadurch **gekennzeichnet,** daß der Kraftfühler ein Dehnungsmesser (11) ist, der in die Zugkupplung des Zugfahrzeugs (10) zwischen der Befestigungsmutter (21) der Kupplung und dem Ende (29) der Zugkupplung eingebaut ist, das zum Anhänger (20) gewandt ist.

6. Zugfahrzeug (10) nach Patentanspruch 4 oder 5, dadurch **gekennzeichnet,** daß der Druckregler (13) mit dem Bremskreislauf des Zugfahrzeugs (10) in der Weise verbunden ist, daß er eine Betriebsspannung von einem Bremslichtschalter (19) nur während des Bremsens erhält.

7. Motorgetriebenes Gelenkfahrzeug, das ein Zugfahrzeug (10) nach einem der Patentansprüche 4 bis 7 und einen Anhänger (20) aufweist, wobei die Vorrichtung zur Einstellung der Bremsen angeordnet ist, nur die Bremsen des Anhängers (20) einzustellen.

FIG. 1

FIG. 3

FIG. 2